# EUROPEAN PATENT APPLICATION

(11) **EP 1 791 303 A1**
(43) Date of publication of application: **30.05.2007**
(21) Application number: 05025773.2
(22) Date of filing: 25.11.2005
(51) Int. Cl.: H04L 12/56

(54) **Load balancing for multipath networks**

(71) Applicant: SIEMENS AKTIENGESELLSCHAFT, 80333 München (DE)
(72) Inventor: Menth, Michael, 97255 Oellingen (DE); Milbrandt, Jens, 97072 Würzburg (DE); Tran-Gia, Phuoc Prof., 97076 Würzburg (DE)

(57) **Abstract**

The invention relates to a method, a computing device, a network element and a system for load balancing over parallel routing paths formed by links of a communication network with multipath routing. Traffic aggregates are determined from a traffic matrix for transporting each traffic aggregate over a corresponding multipath. Distribution of traffic is governed by load distribution functions for distributing the traffic aggregates over the corresponding multipaths. These load distribution functions are calculated my determining those load distribution functions for which the maximum utilization is minimal. By using the determined load distribution functions traffic is distributed in a resource-efficient way.

## Description

The invention relates to a method, a computing device, a network element and a system for load balancing over parallel routing paths formed by links of a communication network with multipath routing.

One trend in modern networks is to use multipath routing, i.e. to provide for a plurality of parallel paths.

The aim of the present invention is to provide for a resource-efficient traffic distribution for multipath networks. Another aim of the invention is to provide for network resilience.

The invention applies to communication networks with traffic distributed over multipaths. Herein, a multipath is defined as a plurality of parallel paths. Parallel paths are characterised by identical starting and end points. Usually, they are chosen to be disjoint. Below the term traffic aggregate is used for the traffic distributed over a corresponding multipath. Normally, a traffic aggregate will comprise different flows that are to be transported from the starting point to the end point of the multipath. Traffic aggregates can be derived from the traffic matrix for the communication network (usually a scheme indicating how much traffic is to be transported between each pair of nodes).

The focus of the invention is how to achieve an optimal distribution of traffic (or of a traffic aggregate) over a multipath. We aim at a traffic distribution that maximizes the amount traffic that can be transported over the network. The most crucial limitation is given by the capacity (or bandwidth) of the individual links of the network. Consequently, the traffic should be distributed equally over the links (as far as possible) or, more precisely, the maximum load of the links should be reduced as much as possible. A suitable measure to compare the load of individual links is provided by the utilization which usually shows the percentage of the link's used capacity (e.g. 1.0 means all of the capacity is used; values greater that one would indicate an overload). The central idea of the invention is to adjust the traffic distribution in such a way that a maximum utilization is minimized.

To perform load balancing over multipaths (parallel routing paths) we proceed in the following way:
a) Traffic aggregates are determined from a traffic matrix.
b) Load distribution functions (or load balancing functions) for distributing the traffic aggregates over corresponding multipaths are introduced. Below, these load distribution functions can be assumed to be normalised. (Alternatively, an extra normalisation step may be added.)
c) A maximum link utilization parameter is introduced, the maximum link utilization being the highest utilization value of a number of links (e.g. all links of the network). There are situations where it is sensible to effectively define the maximum link utilization as the maximum utilization of only a subset of the network's links, e.g. in case of an error scenario where a redistribution of traffic is performed for a part of the multipaths via the present method.
d) Those load distribution functions are determined for which the maximum utilization is minimal, i.e. the maximum utilization is minimized. This can be done by expressing the load on individual links in terms of traffic aggregates and load distribution functions and relating these expressions to the maximum utilization. The solution of a corresponding minimization problem (minimising the maximum utilization) renders the load distribution functions to be used for optimising the traffic distribution.
e) Finally, the traffic is distributed or balanced by using the determined load distribution functions.

The above steps may be performed in a different order (in particular, a permutation of steps a)-c) is straightforward). The present method allows for smoothing the distribution of traffic in communication networks. Peak loads are reduced. Bottlenecks are avoided. As a consequence, the amount of traffic that can be transported by the network is increased.

A global or local minimum of the maximum utilization may be determined. Preferably, a global minimization is performed where the size of the network allows for handling the mathematical problem. For larger size networks one may resort to approximate optimization methods, such as simulated annealing, which often render local minima. Hence, a minimal value of the maximum utilization is to be interpreted as either a global or local minimum.

In step d) constraints or requirements can be set up that lead to a mathematical formulation of a minimization problem. For instance, requirements can be established that the maximum link utilization multiplied by any link's capacity is equal or greater than a sum of individual traffic aggregates each multiplied with the respective load distribution functions for the respective link's path, (the sum being taken over the traffic aggregates with a path of the corresponding multipath including the respective link). An additional constraint may be used to ensure the load distribution functions are normalized.

The above method can be modified for application to error scenarios, i.e. the redistribution of traffic over a multipath in case of network element outage. Upon a network element failure paths that make use of the defective network element are no longer operative. In this case, the self-protecting multipath (STM) concept traffic relies on redistribution of traffic within the individual multipaths, i.e. a traffic aggregate transported over an affected multipath will be subjected to redistribution over the paths of the multipath such that the non-operative path is avoided.

To account for an error scenario the above method is modified as follows.
- As an additional step, an error scenario is defined with the error scenario given by an outage of at least one network element (e.g. link, node).
- Step b1) is substituted for step b). According to step b1) load distribution functions for distributing the traffic aggregates over the corresponding multipaths are introduced for the error scenarios.
- Step d1) is substituted for step d). According to step d1) those load distribution functions are determined for which the maximum utilization is minimal under the constraint that no traffic is transported over that traffic element or those traffic elements subject to outage.

Thus, load distribution functions are obtained for use in case of the error scenario. The traffic is redistributed accordingly once the error scenario materialises.

Generally, in the normal operation case the maximum utilization is preferably smaller than one (no overloaded link). In case of error scenarios one may allow for maximum utilization values larger than one (the only requirement being that the utilization is minimal). The rationale behind this is that keeping the utilization below one in the error scenarios may require reducing the load in the normal operation case below the limits necessary to avoid overload, i.e. there may a trade-off between the amount of traffic that can be transported in the normal operation case and possible loss of traffic in error scenarios.

A mathematical formulation of the minimization problem for an error scenario can be established similarly as for normal operation. A requirement or constraint can be formulated that the maximum link utilization multiplied by any link's capacity is equal or greater than a sum of individual traffic aggregates each multiplied with the respective (error scenario dependent) load distribution function for the link's path. The sum is suitably taken over the traffic aggregates with a path of the corresponding multipath including the respective link.

One can limit the determination of load distribution functions to those multipaths directly affected by the outage (i.e. comprising a defective path). In this case the maximum utilization is calculated as a limit for links of paths that are comprised by affected multipaths. Then the redistribution is performed within the multipaths affected by the outage. Alternatively, the load distribution rates may be determined for all multipaths. Such a way to proceed allows for the redistribution of traffic within fully operative multipaths. The rationale behind this is that a fully operative multipath may have a common link with an affected multipath. Such a global optimisation generally leads to a redistribution of traffic within the non-affected paths from the paths comprising a commonly used link to other paths that have no common links with an affected multipath. The trade-off is a more complex optimisation problem.

Generally, the minimization of the maximum (link) utilization does not only render the load distribution values to be used (in the normal operation case or in the error scenario) but also the value for the maximum utilization. This value indicates whether the network can carry the offered load (represented by the traffic matrix). Modern networks usually employ traffic engineering to deal with traffic overload. For instance, traffic may be limited via access control at the network's border. Traffic may be limited in a way to ensure regular performance. The value of the maximum utilization is an important parameter to assess whether traffic is still within bounds. This value can be feedback for adjusting or tuning the parameters used for traffic engineering (such as limits or budgets for the admissible traffic).

In order to provide for a resilient network, i.e. a network with a performance not substantially affected by failures, a set of error scenarios may be taken into account. Such a set of error scenarios may comprise all outages of a single network element. More complex sets of error scenarios can be identified taking into account network topology and network specifics. To compute a common value of the maximum utilization as an indicator whether normal operation is possible in all error scenarios a set of error scenarios may be included in the optimization problem, i.e. constraint or requirements are formulated for all of the considered error scenarios. Then the solution will then render load distribution function values for these error scenarios as well as a maximum value for the utilization with the maximum also taken over the error scenarios. A value of the maximum utilization below a critical threshold guarantees that the network is operational in all error scenarios.

The determination of load distribution functions to be used in error scenarios may be performed prior to such a scenario. More specifically, load distribution may be calculated in advance for a set of error scenarios and supplied for use in case of failures. The determination or calculation of these load distribution functions may be performed centrally, e.g. by a network management facility, and then be distributed to nodes (e.g. edge devices) that form the root or starting point of a multipath. Once a network failure is detected the root node of the multipath employs the load distribution functions provided for the corresponding error scenarios.

The invention also comprises a computing device for determining load distribution functions and a maximum utilization. This computing device may comprise software, hardware, firmware or a combination thereof to perform the requisite computation to obtain load distribution functions and a maximum utilization. Preferably, the computer device forms part of a central entity, such as network management. According to an embodiment, the computing device further comprises means for distributing computed load distribution functions. The invention further comprises a node (e.g. router) especially adapted for receiving load distribution functions, for storing these load distribution functions, for detecting a network element outage, for identifying load distribution functions for a corresponding error scenario, and for employing this load distribution functions so as to redirect or redistribute traffic. Typically, such a node is an edge router that manages the multipaths originating at the border of the network.

An embodiment of the invention is provided in the following paper.

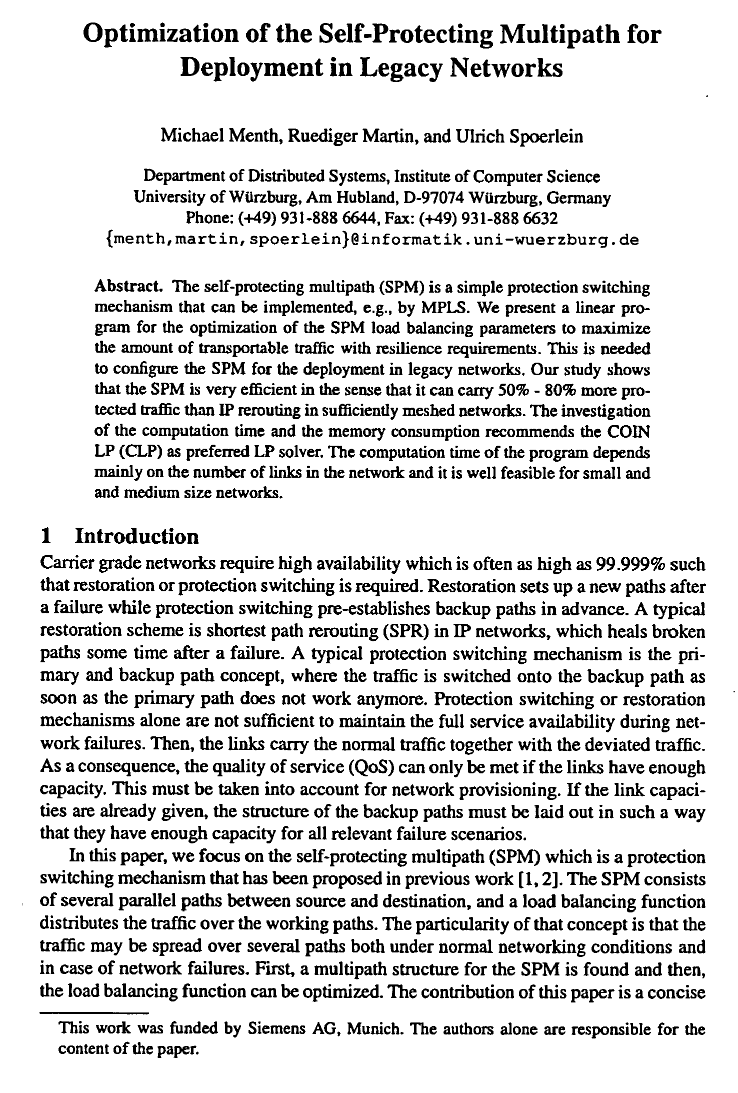

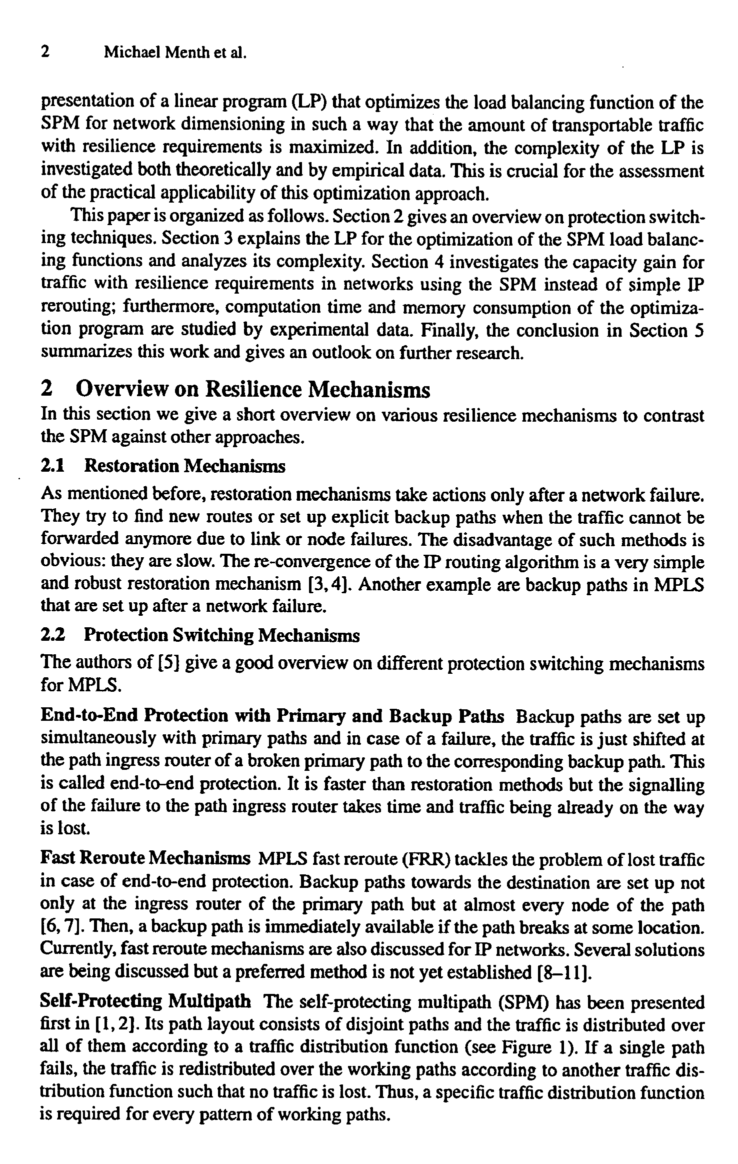

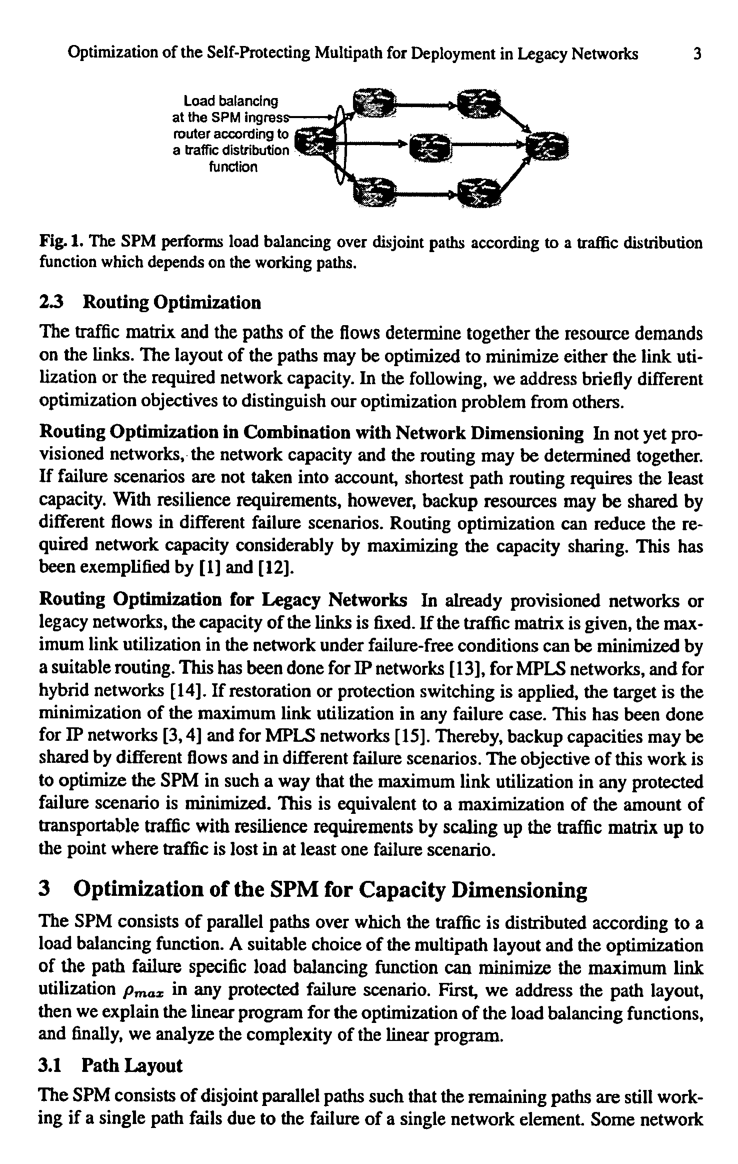

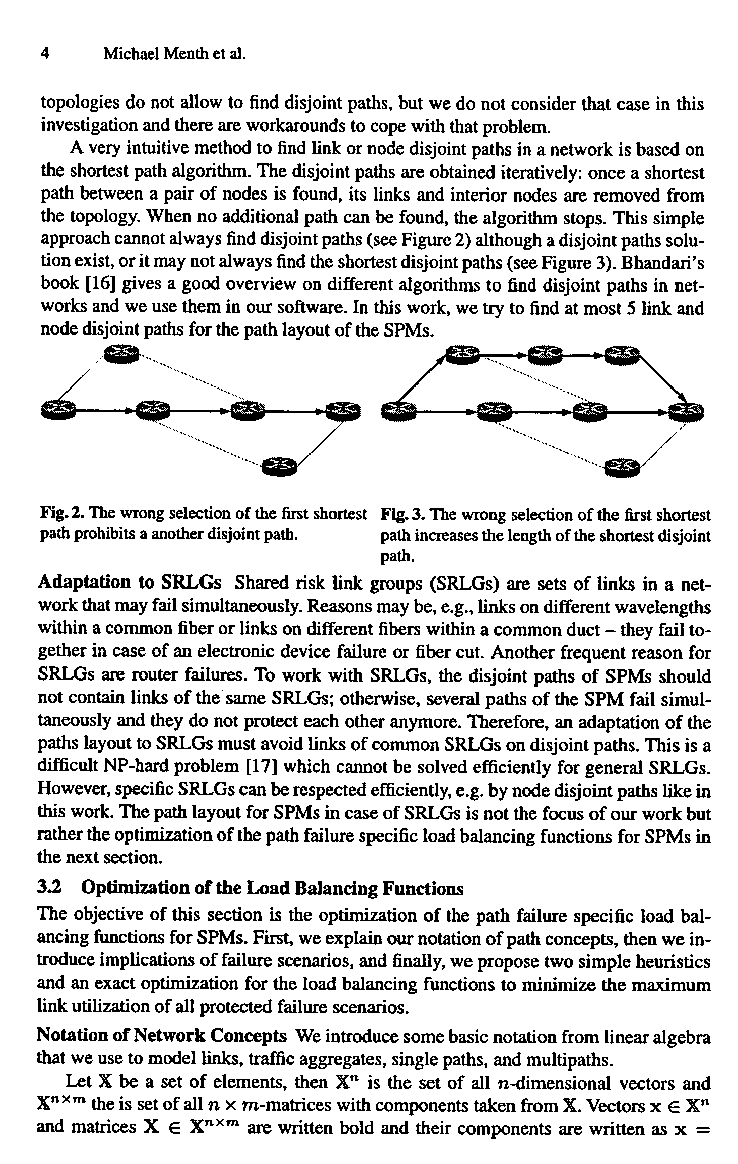

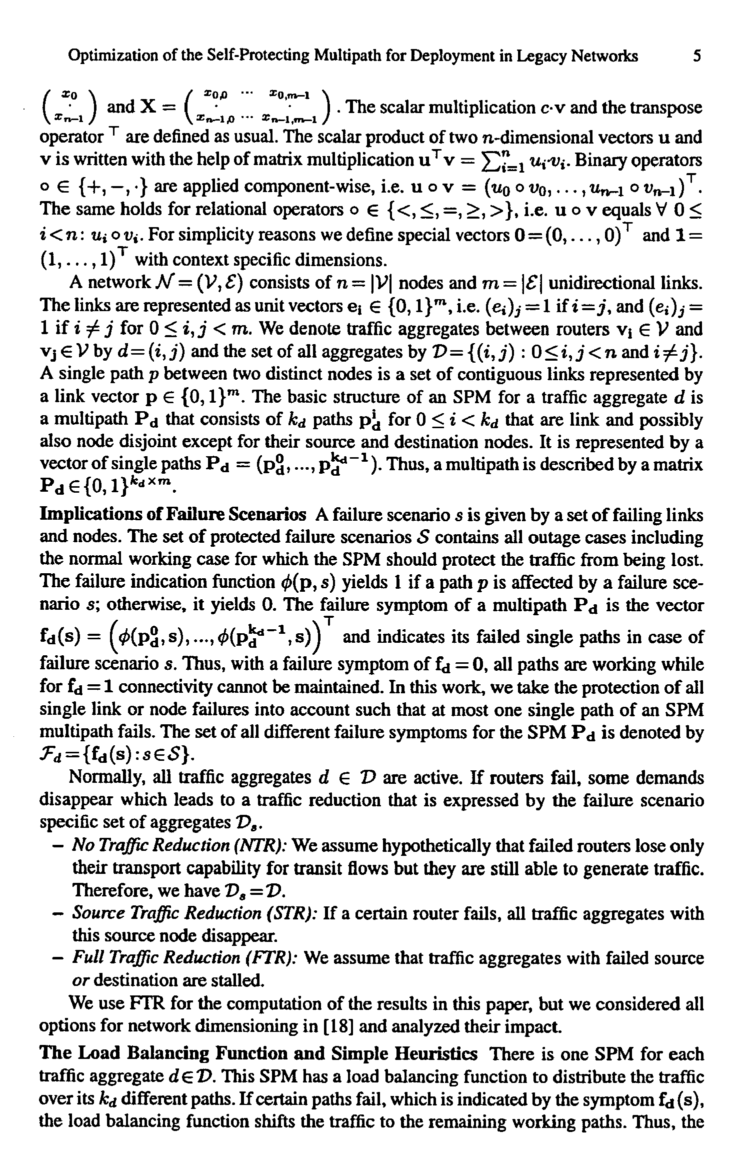

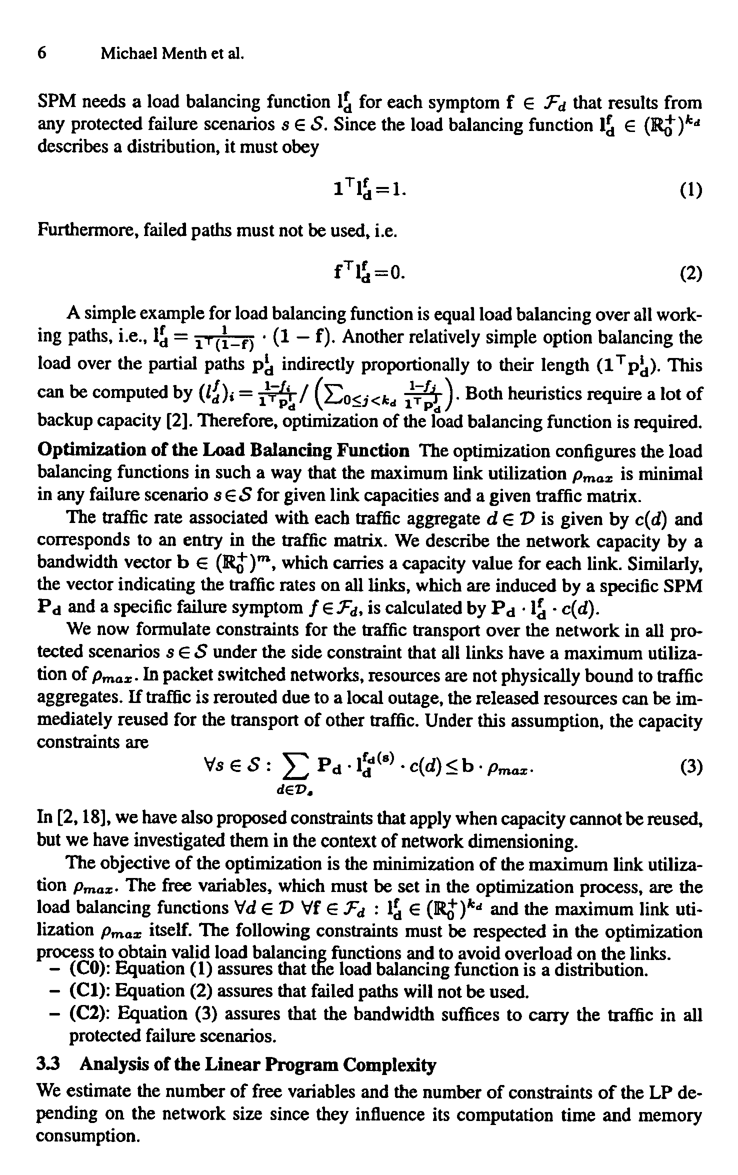

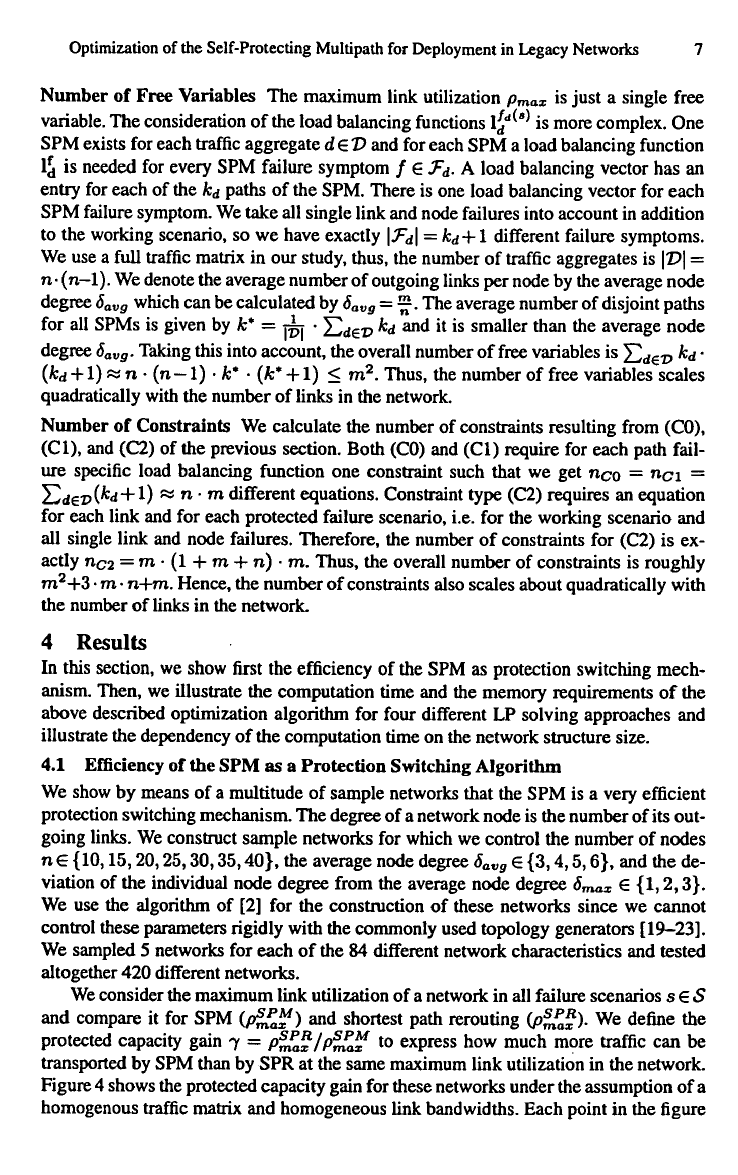

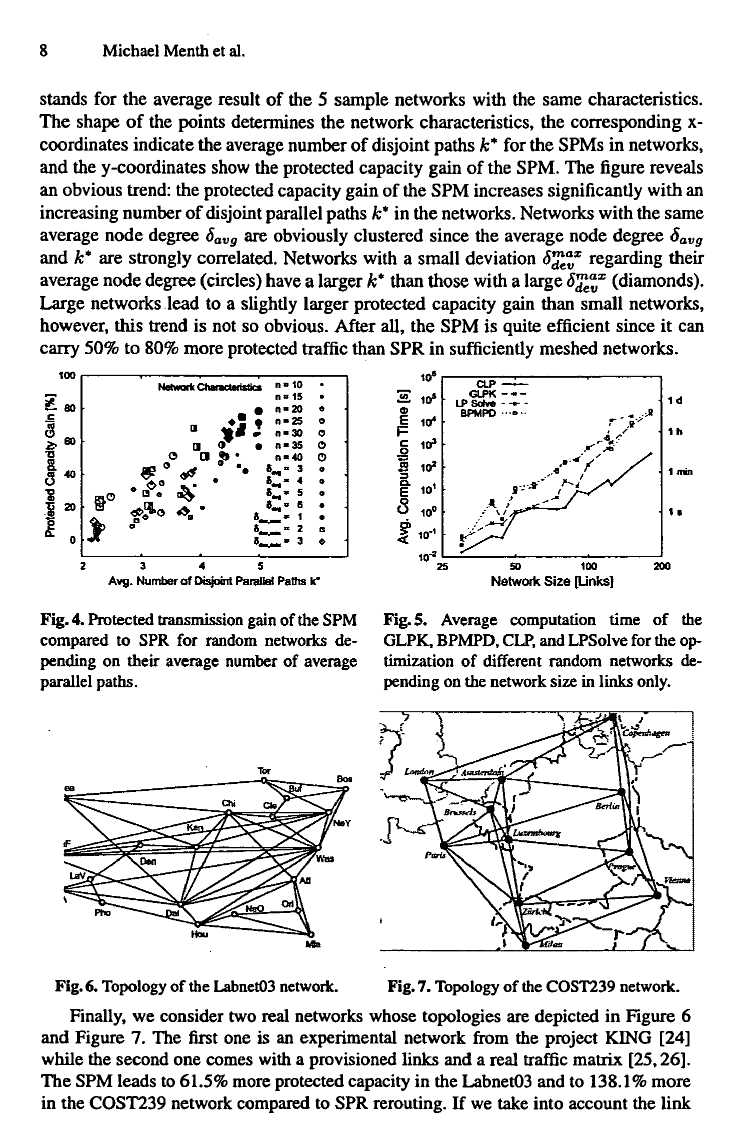

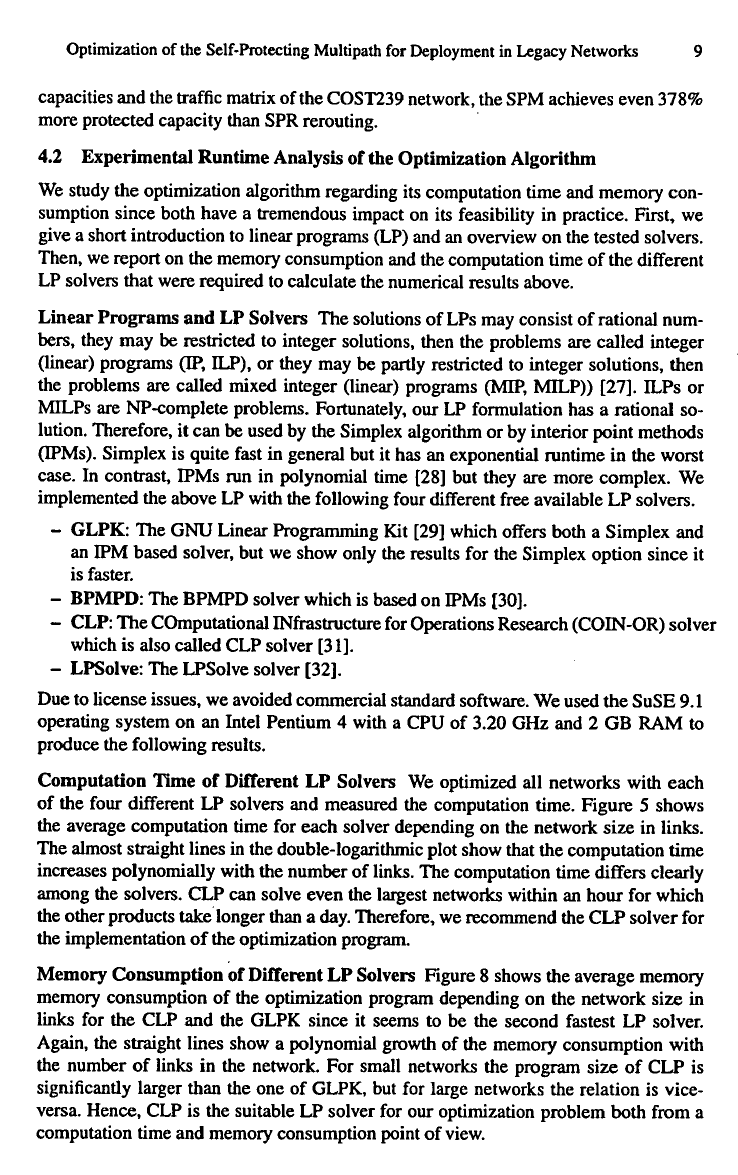

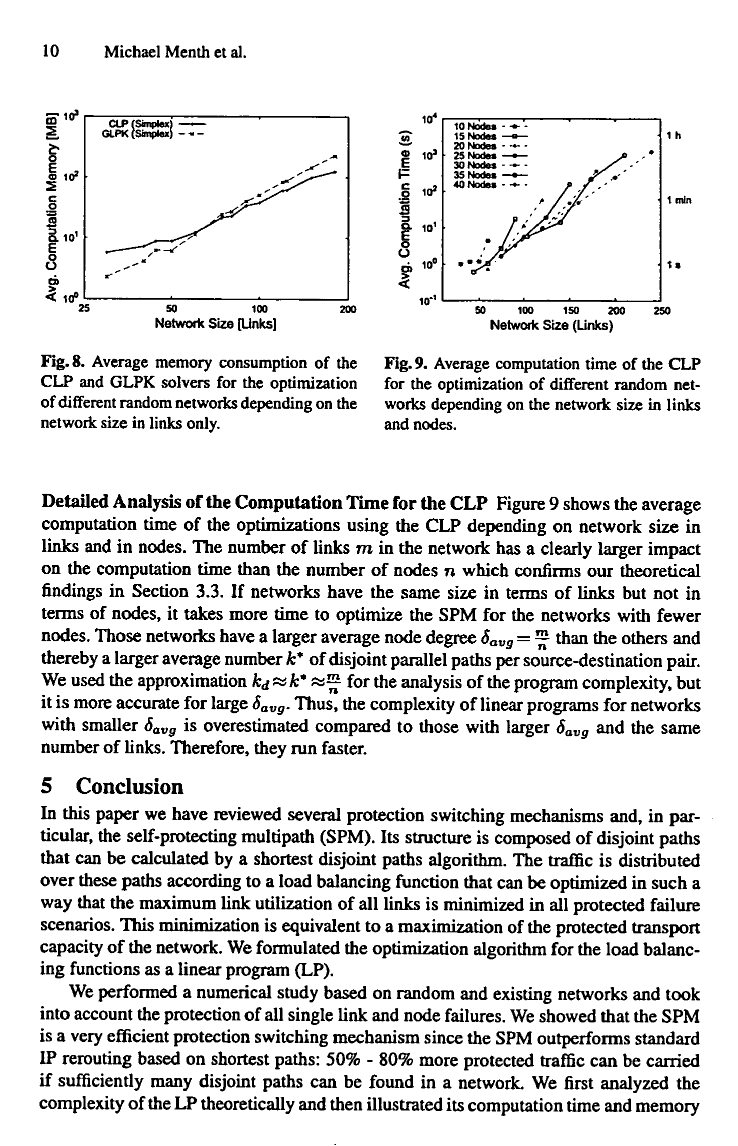

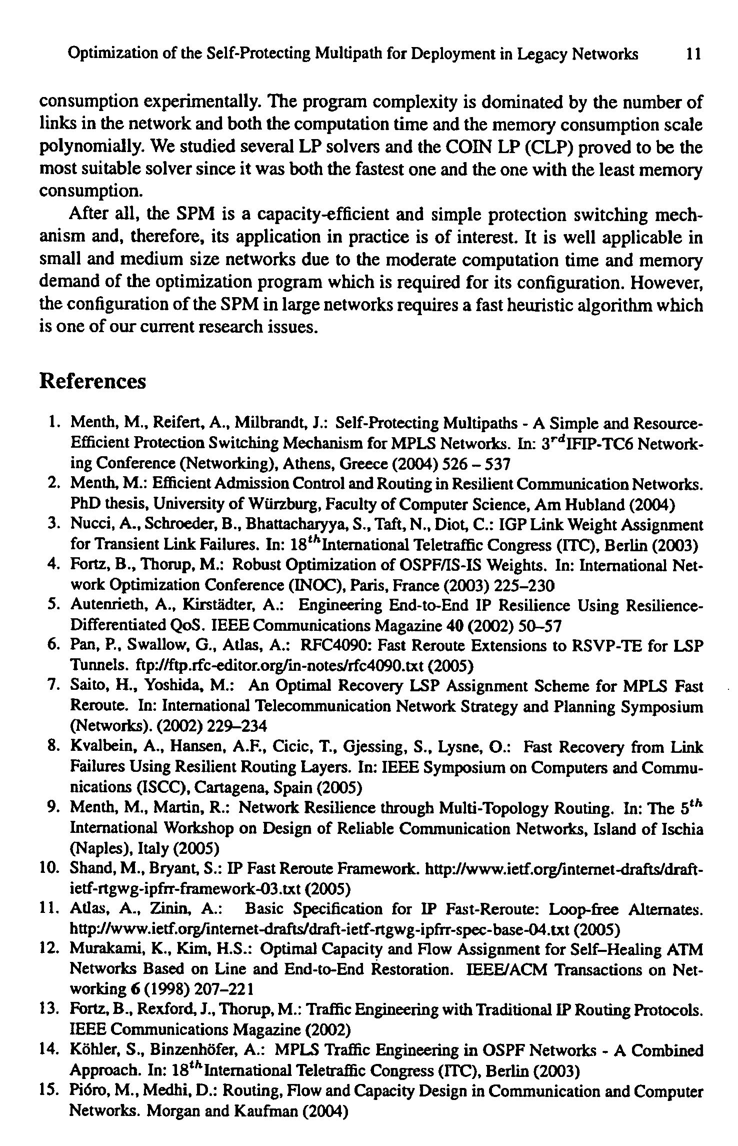

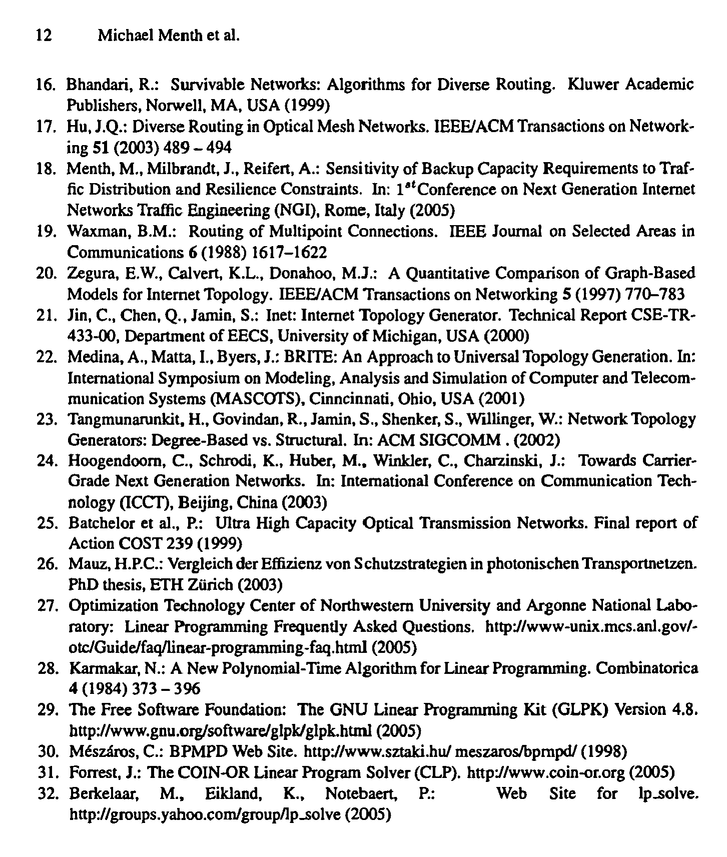

## Claims

1. A method for load balancing over parallel routing paths formed by links of a communication network with multipath routing, comprising
a) determining traffic aggregates from a traffic matrix for transporting each traffic aggregate over a corresponding multipath,
b) introducing load distribution functions for distributing the traffic aggregates over the corresponding multipaths,
c) introducing a maximum link utilization,
d) determining those load distribution functions for which the maximum utilization is minimal, and
e) distributing traffic according to the determined functions.

2. The method according to claim 1,
**characterized in that**
- an error scenario is defined with the error scenario given by an outage of at least one network element,
- step b) is replaced by step b), and
- step d) is replaced by step d1), wherein the steps are b1) introducing load distribution functions for distributing the traffic aggregates over the corresponding multipaths for the error scenario, and
d1) determining load distribution functions for which the maximum utilization is minimal under the constraint that no traffic is transported over that traffic element or those traffic elements subject to outage in the error scenario.

3. The method according to claim 1 or 2,
**characterized in that**
requirements are introduced to formulate a minimization problem by requiring that the maximum link utilization multiplied by any link's capacity is equal or greater than a sum of individual traffic aggregates each multiplied with the respective load distribution function for the link's path.

4. The method according to one of the preceding claims,
**characterized in that**
a global or local minimum of the maximum link utilization is determined.

5. The method according to one of the claims 2 to 4,
**characterized in that**
load distribution functions are determined for those multipaths affected by the error scenario.

6. The method according to one of the claims 2 to 4,
**characterized in that**
load distribution functions are determined for all multipaths.

7. The method according to one of the claims 2 to 6,
**characterized in that**
- the method is performed for a set of error scenarios,
- a maximum link utilization for the set of error scenarios is introduced, and
- load distribution functions are determined for which the maximum utilization is minimal under the constraint that no traffic is transported over that traffic element or those traffic elements subject to outage in the respective error scenario.

8. The method according to one of the preceding claims,
**characterized in that**
the minimal value of the maximum utilization is provided to a traffic engineering entity and used for traffic engineering.

9. The method according to one of the claims 2 to 8,
**characterized in that**
- load distribution functions are calculated for at least one error scenario prior to network failures, and
- the calculated load distribution functions are employed once the error scenario materializes.

10. The method according to claim 9,
**characterized in that**
- the load distribution functions are calculated centrally, and
- the calculated functions are supplied to network elements to be employed when an network element outage occurs.

11. Computing device comprising means for calculating load distribution functions according to one of the above methods.

12. The computing device according to claim 11, further comprising means for distributing load distribution functions to network elements.

13. The computing device according to claim 11 or 12, further comprising means for providing a calculated value for the maximum utilization to a traffic engineering entity.

14. Network element, in particular edge router, comprising means
- for receiving load distribution functions,
- for storing these load distribution functions,
- for detecting a network element outage,
- for identifying load distribution functions for a corresponding error scenario, and
- for employing this load distribution functions so as to redirect or redistribute traffic.

15. System for performing a method according to one of the claims 1 to 10, comprising
- a computing device according to one of the claims 11 to 13, and
- at least one network element according to claim 14.
